# EUROPEAN PATENT SPECIFICATION

(11) **EP 4 521 316 B1**
(45) Date of publication and mention of the grant of the patent: **04.11.2026**
(21) Application number: 24198571.2
(22) Date of filing: 05.09.2024
(51) Int. Cl.: G06Q 10/04, G06Q 10/08, G06Q 50/04

(54) **COMPUTER-IMPLEMENTED METHOD FOR ENERGY EFFICIENCY MANAGEMENT OF AN INDUSTRIAL PLANT**
COMPUTERIMPLEMENTIERTES VERFAHREN ZUR ENERGIEEFFIZIENZVERWALTUNG EINER INDUSTRIEANLAGE
PROCÉDÉ MIS EN UVRE PAR ORDINATEUR POUR LA GESTION DE L'EFFICACITÉ ÉNERGÉTIQUE D'UNE INSTALLATION INDUSTRIELLE

(30) Priority: 08.09.2023 IT 202300018525
(43) Date of publication of application: 12.03.2025
(73) Proprietor: Tinental S.r.l., 41030 Bastiglia (MO) (IT)
(72) Inventor: LUPPI, Nicolo', 41030 Bastiglia (MO) (IT); MORANDI, Sara, 41030 Bastiglia (MO) (IT)
(74) Representative: Grana, Daniele

(56) References cited:
- US-A1- 2017 140 396
- US-A1- 2023 021 961

## Description

### Technical Field

The present invention relates to a computer-implemented method for energy efficiency management of an industrial plant.

### Background Art

In particular, the computer-implemented method according to the invention can be used to check whether the energy consumption (or otherwise the efficiency) of at least one industrial appliance within an industrial plant is the optimal one and whether it can be improved, if necessary.

In this regard, the use of systems for monitoring industrial plants is well known.

Specifically, such monitoring systems allow for real-time detection of any failures or malfunctions and, in addition, allow for the collection of representative data on the operation of the monitored appliances.

For example, the use of industrial pumps for cooling and lubrication systems, for fluid transfer and within hydraulic systems is well-known and widely used in the industry.

The use of the aforementioned monitoring systems thus makes it possible to detect any malfunctions of the pumps and to detect their actual mode of use during plant operation.

However, the systems of known type do not allow for the management of plant energy consumption and, in particular, are unable to determine whether the energy consumption and/or energy efficiency of each appliance within the plant can be improved through the use of a different appliance and/or through a different setting of the appliance itself.

For example, with reference to industrial pumps, it is in no way possible, by means of the systems of known type, to determine whether the use of a different pump, possibly selected from products of several different suppliers, can result in better energy consumption and/or better efficiency.

Specifically, data for different industrial pumps are commonly collected in different data sheets and the technical operating characteristics of each pump are usually represented by means of multiple graphs.

Therefore, an assessment of the impact on energy consumption and efficiency as a result of using a different pump on a plant can only be carried out by a specialist in the field, who must in turn employ his or her expertise and a not insignificant amount of time to make a comparison between the pump installed on the plant and the available pumps taken into consideration.

Clearly, it is impossible for a trained technician to consider and evaluate all the pumps available on the market along an acceptable time frame.

Document US 2017/140396 A1 discloses a computer-implemented method for identifying utility usage from a historical utility file is disclosed.

Document US 2023/021961 A1 discloses methods, systems, and computer-readable storage media for receiving data representative of a physical entity, generating an initial knowledge graph representative of a process that is executed by the physical entity based on the data, enriching the initial knowledge graph to provide a process aware energy consumption (PAEC) digital twin of the process as an enriched knowledge graph, providing at least two permutations based on the PAEC digital twin, executing analytics at least partially based on the at least two permutations to provide one or more recommendations, and executing at least one recommendation to optimize energy consumption of the physical entity.

### Description of the Invention

The main aim of the present invention is to devise a computer-implemented method for energy efficiency management of an industrial plant which makes it possible to check quickly and accurately whether the energy consumption or otherwise the efficiency of one or more industrial appliances within an industrial plant is the optimal one and whether it can be improved, if necessary, by the use of a different appliance available on the market.

The aforementioned objects are achieved by this computer-implemented method for energy efficiency management of an industrial plant according to the characteristics described in claim 1.

### Brief Description of the Drawings

Other characteristics and advantages of the present invention will become more apparent from the description of a preferred, but not exclusive, embodiment of a computer-implemented method for energy efficiency management of an industrial plant, illustrated by way of an indicative, yet nonlimiting example in the accompanying tables of drawings in which:
Figure 1 is a general diagram of the computer-implemented method according to the invention;
Figures 2 through 11 are functional diagrams detailing the computer-implemented method according to the invention.

### Embodiments of the Invention

With particular reference to these figures, reference numeral 1 globally denotes a computer-implemented method for energy efficiency management of an industrial plant which can be used in particular to check whether the energy consumption (or otherwise the efficiency) of at least one industrial appliance within an industrial plant is the optimal one and whether it can be improved, if necessary.

The term "industrial appliance" refers to all appliances or devices that can be used industrially on a plant.

With reference to a preferred application, the computer-implemented method according to the invention is used to manage the energy efficiency of industrial pumps, meant to be the pumps widely used in the industry to provide cooling and lubrication services, to transfer fluids and to provide motive power to hydraulic systems.

Industrial pumps consist of a pump system moved by an electric motor.

In the following description and in the related figures, explicit reference will be made to the operation of industrial pumps, without ruling out the application of the computer-implemented method according to the invention to different types of appliance and device that can be used on an industrial plant.

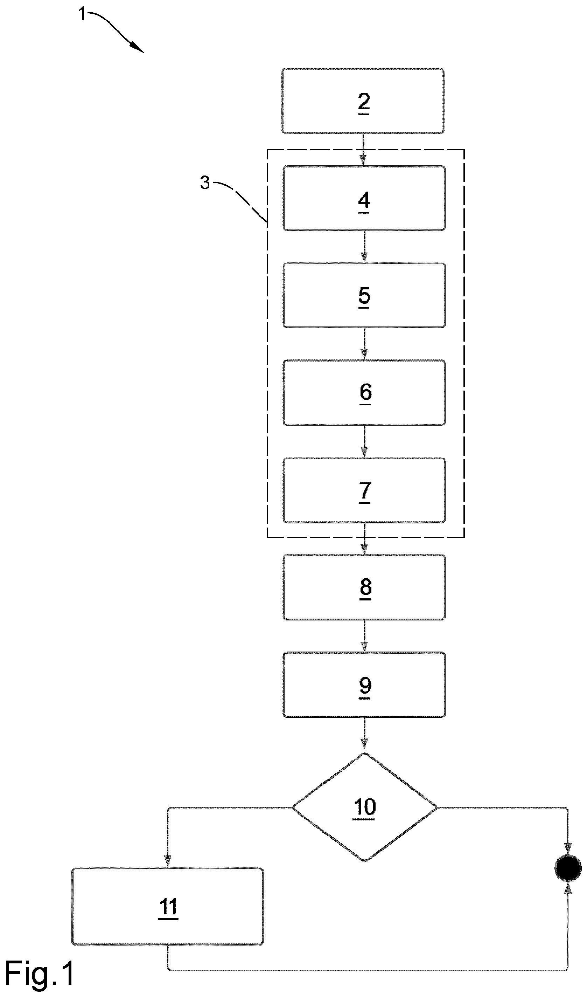

As schematically shown in Figure 1, the computer-implemented method 1 comprises at least the following steps:
- starting from a plurality of files relating to data sheets of industrial appliances, a step 2 of extraction of the image files of graphs G containing curves C describing the technical characteristics of the industrial appliances and of text files relating to the description of the industrial appliances;
- a step 3 of determination of the characteristic equations of the curves C, defined in the specific Cartesian space of each graph, starting from the image files of graphs G;
- a step 8 of calculating the energy consumption of each industrial appliance by means of the determined characteristic equations;
- a step 9 of comparing the calculated energy consumption of each of the industrial appliances with the energy consumption of at least one industrial appliance in an existing industrial plant.

As a result of this comparison, if the energy consumption of the industrial plant can be reduced (step 10) or if, the energy consumption being the same, the efficiency of the industrial plant can be improved, then a step 11 is carried out of generation of an alert and of a report comprising the suggested changes to the industrial appliance used in the industrial plant.

The step 3 of determination of the characteristic equations of the curves C defined in the specific Cartesian space of each graph is further detailed again in Figure 1.

Specifically, the aforementioned step 3 of determination of the characteristic equations comprises a step 4 of identification of the images of the curves C representative of the technical characteristics of the industrial appliances starting from the image files of the graphs G.

Next, the step 3 of determination of the characteristic equations comprises a step 5 of extraction and rearrangement of the spatial coordinates of the pixels of the images of the representative curves C to determine the spatial coordinates of each of the curves C.

In addition, the step 3 of determination of the characteristic equations comprises a step 6 of extraction of the equations relating to the curves C by means of interpolation of the spatial coordinates of each of the curves C.

Next, the step 3 of determination of the characteristic equations comprises a step 7 of extraction of the scale of values representing the x-axis and y-axis starting from the image files of the graphs G.

Finally, the step 3 of determination of the characteristic equations comprises a step of combining the equations extracted by interpolation of the spatial coordinates of each of the curves C with the scale of values representing the x-axis and y-axis to obtain the characteristic equations of the curves C defined in the specific Cartesian space of each graph G.

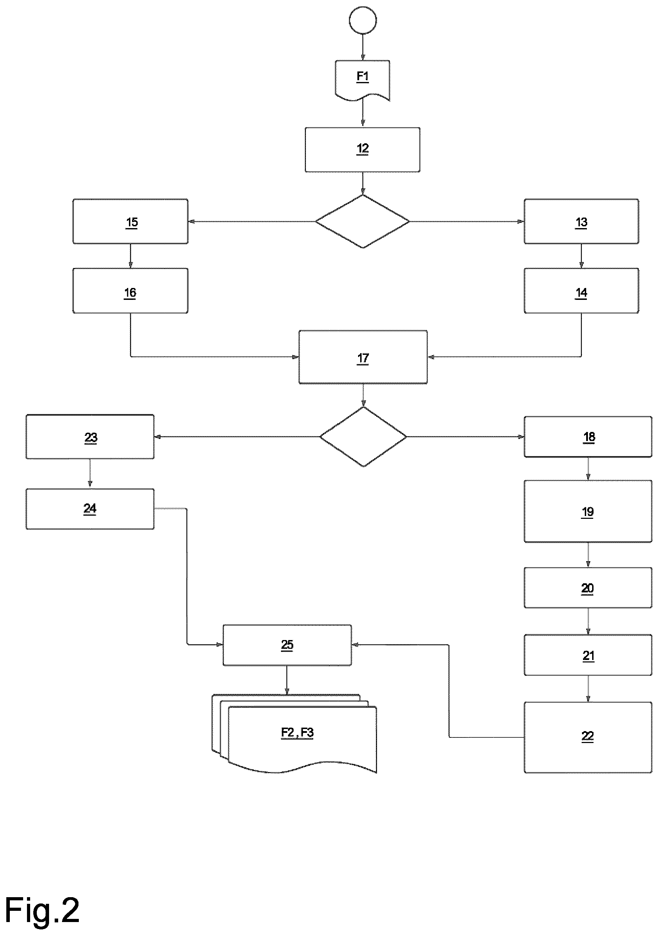

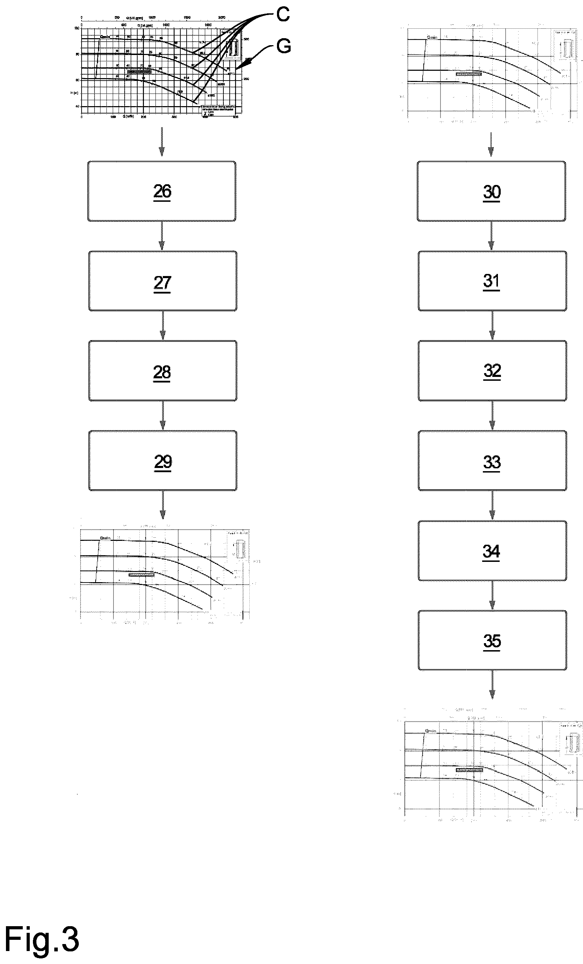

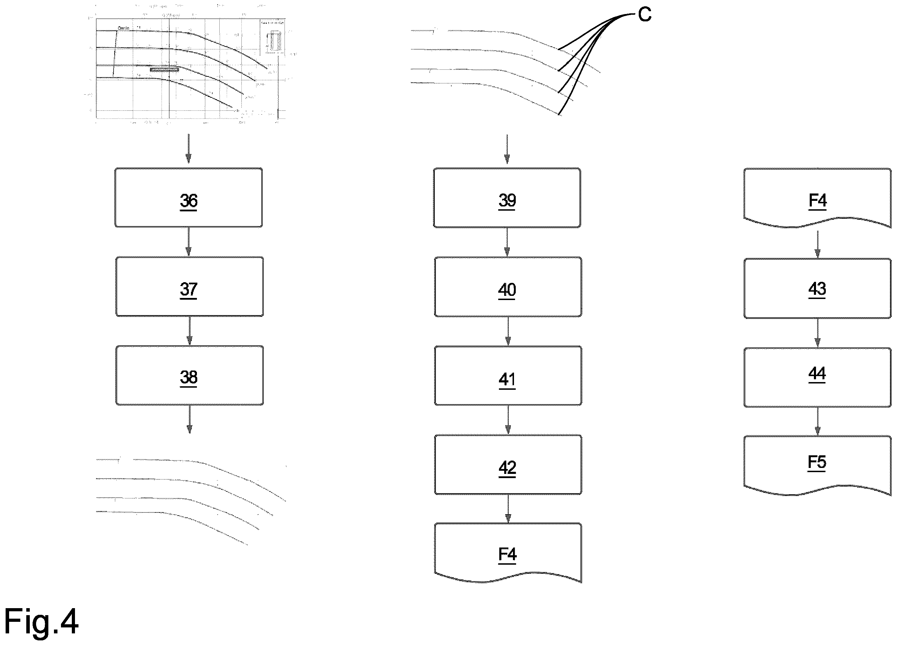

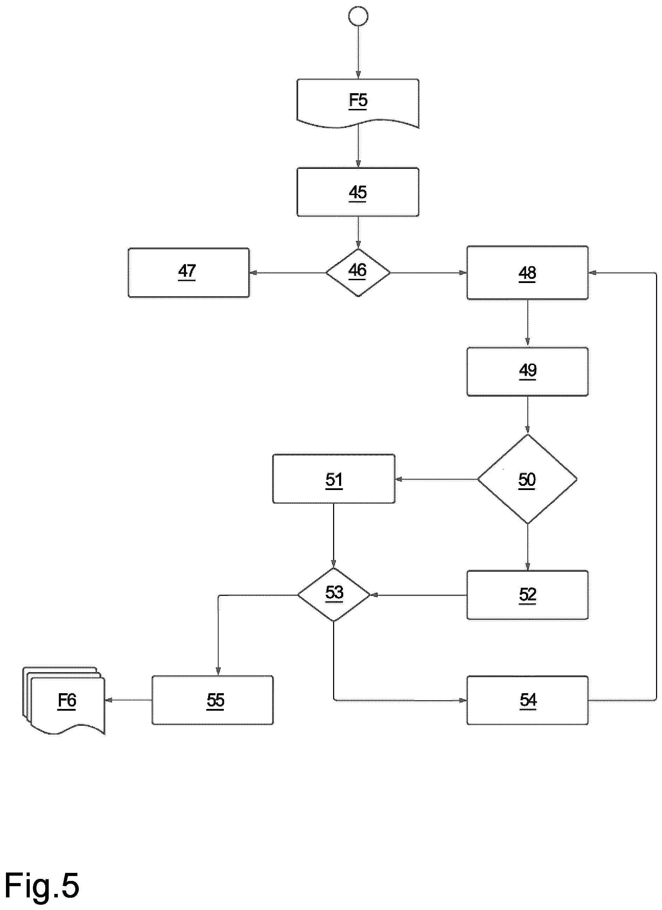

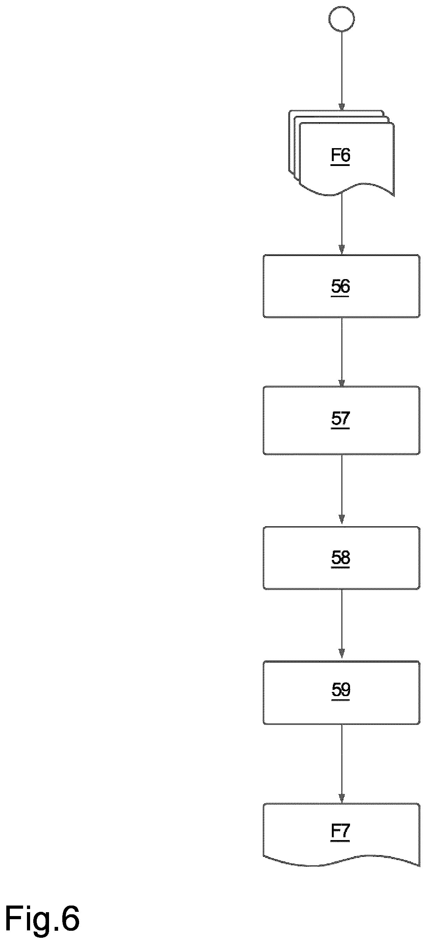

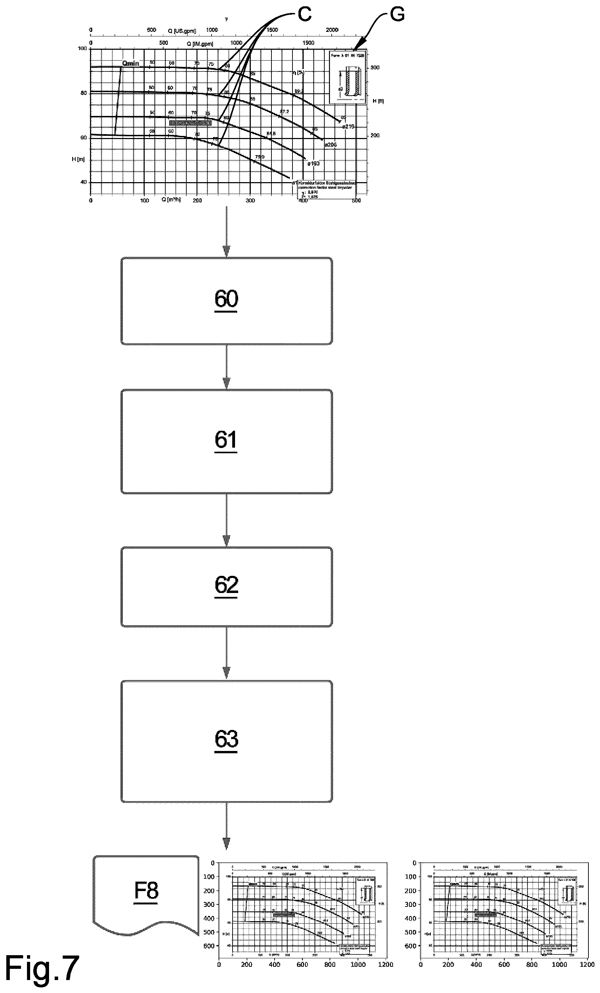

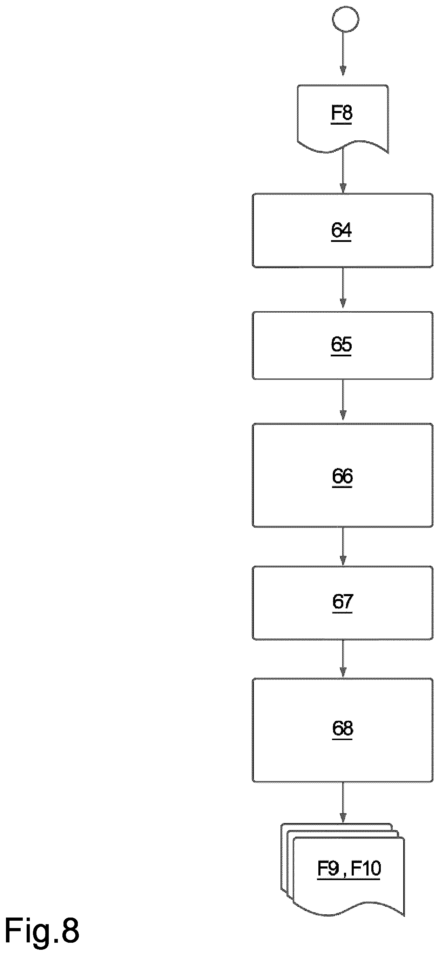

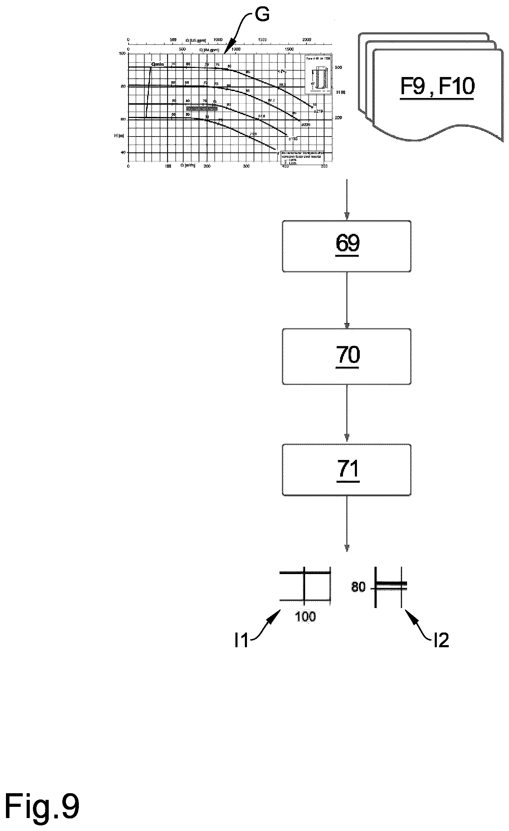

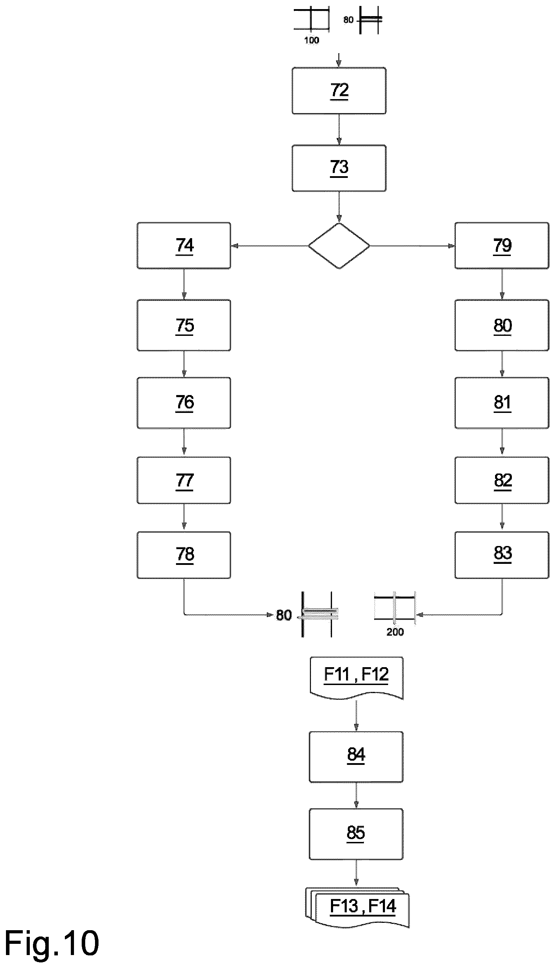

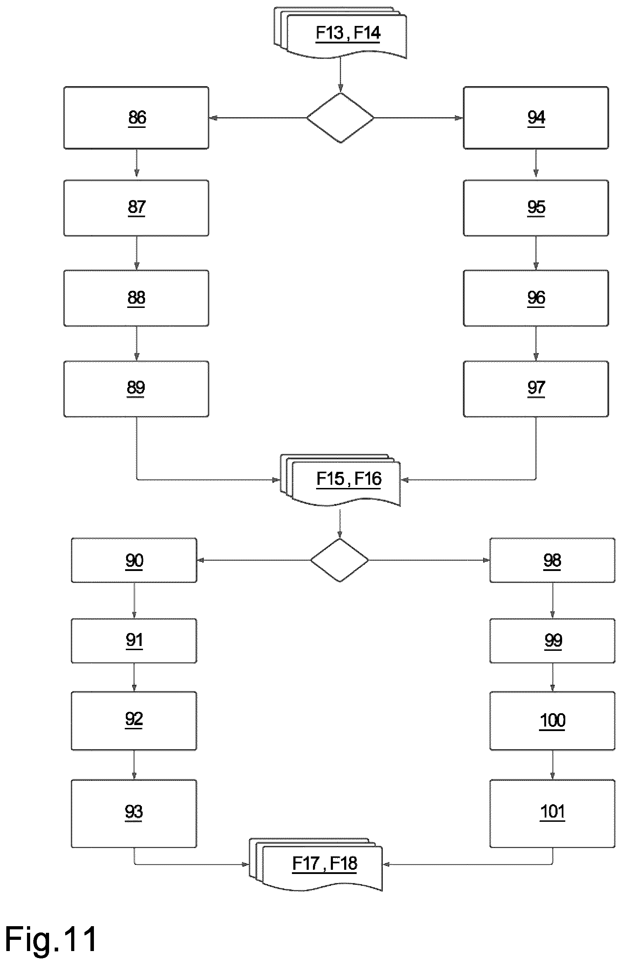

A possible and preferred embodiment of the steps described above is detailed below. These steps are also schematically detailed in Figures 2 through 11.

According to a preferred embodiment, the files relating to the data sheets of the industrial appliances are in PDF format.

As shown in Figure 2, the step 2 of extraction comprises a preliminary step 12 of separating the pages of the PDF file, indicated in the figure by reference F1, and saving each page to a respective file in JPG format.

Next, the step of extraction 2 comprises at least the following steps:
- by means of a neural network, recognize within the files relating to data sheets the graphs G relating to the technical characteristics of the industrial appliances (step 13);
- save a plurality of image files relating to the recognized graphs G (step 14).

Specifically, according to the preferred embodiment, the neural network used recognizes the graphs G within the JPG files containing the individual pages of the data sheets.

For example, the neural network can be implemented by means of a neural network for YOLOv5 image processing.

Once recognized, the graphs G are cropped and each crop is saved to a respective image file in JPG format.

Next, the step 2 of extraction comprises at least the following steps:
- by means of a neural network, recognize within the files relating to data sheets a description of the industrial appliances (step 15);
- save a plurality of image files relating to the recognized descriptions (step 16).

Specifically, according to the preferred embodiment, the neural network used recognizes the descriptions relating to the industrial appliances within the JPG files containing the individual pages of the data sheets.

For example, the second neural network can be implemented by means of a neural network for YOLOv8 image processing.

Once recognized, the descriptions are cropped and each crop is saved to a respective image file in JPG format.

Next, a step 17 is carried out of creation of a unique folder with multiple subfolders and of saving within each of these subfolders the image files of graphs G and of the descriptions relating to the same page of a data sheet.

With reference to the image files relating to the graphs G, the step 2 of extraction comprises the conversion of the images to grayscale (step 18).

In addition, the step 2 of extraction comprises a step 19 of kernel sharpening to improve the quality of the images relating to the graphs (G).

Next, the step 2 of extraction comprises at least the following steps:
- by means of an OCR software module, recognize the text within the images relating to the graphs G (step 20);
- compare the recognized text with predefined words relating to a specific type of graph (step 21);
- when the recognized text matches a predefined word, classify the corresponding image as relating to a specific type of graph and rename an image file F2 relating to that graph according to the specific type (step 22).

For example, with specific reference to the use of the method 1 according to the invention for energy efficiency management of industrial pumps, the recognized text is compared with predefined words comprising NPSH, H[m], P[kW] and, in case of correspondence, the images are classified according to the following type of graphs (G):
NPSH corresponds to a graph showing the net positive suction head of a pump;
H[m] corresponds to a graph showing the head of the pump flow rate;
P[kW] corresponds to a graph showing the trend of the pump power (cavitation).

The corresponding image files relating to the graphs G are renamed as NPSH.jpg, prevalence.jpg and power.jpg, respectively.

With reference to the image files relating to the description of the industrial appliances, each file within each subfolder is analyzed and, specifically, the step 2 of extraction comprises at least the following steps:
- by means of an OCR software module, recognize the text within the images relating to the description of the industrial appliances (step 23);
- creation and saving of text files F2 relating to the description (step 24).

The step 2 of extraction ends up with the creation of a folder for each page of the pdf data sheet, containing a descriptive image, the renamed images of the graphs G and the text files, preferably in csv format, containing the description (step 25).

Preferably, the step 4 of identification comprises a first step 26 of conversion of the images to grayscale relating to the graphs G to reduce the complexity of the images themselves.

In addition, for each image, the step 4 of identification comprises a step 27 of creation of a kernel of size 3x3.

Next, the step 4 of identification comprises at least the following steps:
- for each image relating to a graph G, carry out a morphological transformation to increase the white regions of the image and decrease the black regions (step 28);
- for each transformed image, apply an image threshold, wherein all pixels with intensity value less than a predefined threshold value, preferably equal to 32, become black (value 0) and all others white (value 255) (step 29).

Preferably, the step 4 of identification subsequently involves an additional step 30 of conversion the obtained images to grayscale.

In addition, the step 4 of identification comprises at least the following steps:
- set a predefined intensity value of the pixels, preferably equal to 55 (step 31);
- for each transformed image and to which the image threshold has been applied, recognize all pixels with lower intensity than the predefined intensity value (step 32);
- collect all recognized pixels into an array and create a binary mask in which the pixels with lower predefined intensity value (55) are set to TRUE, while the remaining are set to FALSE (steps 33 and 34),
- for each transformed image and to which the image threshold has been applied, use the mask created to color the pixels set to TRUE with a predefined color (e.g. color (0,119,204) in BGR format) (step 35).

According to a preferred embodiment, for each image with colored pixels, the step 4 of identification comprises a step 36 of conversion from the color space BGR to the color space HSV to enable better color-based segmentation.

In addition, the step 4 of identification comprises at least the following steps:
- creation of a binary mask to isolate a specific color range (step 37);
- for each obtained image with colored pixels, apply the binary mask to make white all pixels that do not match (the binary mask created and, therefore, do not match) the colored pixels (step 38);

The next step 5 of extraction and rearrangement involves the following preliminary steps:
- apply a predefined threshold value (preferably equal to 90) to the grayscale image in order to create a binary mask (step 39);
- apply the mask to the image with the colored pixels with a bit-to-bit "AND" operation so that the colored pixels are isolated (step 40).

In addition, the step 5 of extraction and rearrangement of the spatial coordinates comprises at least the following steps:
- extraction of the spatial coordinates of the colored pixels from the image with the colored pixels (step 41);
- saving the extracted spatial coordinates to an F4 file, preferably a csv file (step 42);
- sorting the extracted coordinates with respect to the x column (step 43);
- creation of a new F5 save file, preferably of csv type with the coordinates sorted according to the x column (step 44);

In addition, the step 5 of extraction and rearrangement of the spatial coordinates comprises at least the following steps carried out cyclically:
- read a coordinate from the F5 file with the coordinates sorted according to the x column (step 45);
- if the read coordinate is a first coordinate (step 46), create a new file, preferably a csv file (step 47);
- if the read coordinate is not a first coordinate (step 46), calculate the Euclidean distance between the read coordinate and the last coordinate in each file (step 48);
- locate the file in which the last coordinate is closest to the read coordinate (step 49);
- if the distance of the read coordinate is less than a predefined threshold distance (step 50), enter the read coordinate at the end of the detected file (step 51);
- if the distance of the read coordinate is greater than the predefined threshold distance (step 50), create a new file relating to a different curve and save the read coordinate (step 52);
- if each coordinate within the file has not been read (step 53), read the next coordinate and return to the step 48 of calculating the Euclidean distance between the read coordinate and the last coordinate in each file (step 54);
- if all coordinates within the file have been read (step 53), delete the files with less than a predefined number of coordinates, preferably 30 (step 55).

Thus, for each of the graphs G, the files containing isolated points are deleted and as many F6 files are created as there are curves C within a graph G.

The step 6 of extraction of the equations comprises at least the following steps:
- for each of the F6 files relating to each of the curves C, apply a regression function (preferably a polynomial regression) to approximate the represented curves C (step 56);
- possibly, a step of adjustment of the y-axis coordinates according to the model of the curves (step 57);
- creation of a descriptive function (preferably of a tenth-degree polynomial) of the trend of each curve (step 58);
- saving the descriptive function (preferably polynomial expressions) obtained for each curve to an F7 file, preferably of the txt type (step 59).

Next step 7 of extraction of the scale of values comprises a preliminary step 60 of image conversion from color space BGR to color space RGB for more accurate image display.

In addition, the step 7 of extraction of the scale of values comprises at least the following steps, carried out for each image of a graph G:
- apply an algorithm of optical character recognition (OCR), preferably using a Deep Neural network, to identify the text within the image (step 61);
- create a new image comprising boxes drawn around the recognized text (step 62);
- save the data to a new output file F8 (preferably of the csv type) containing the recognized text and the coordinates of the corresponding bounding boxes (step 63);
- read the output file F8 starting from the last row and sort the coordinates of the boxes in ascending order with respect to the x-axis (step 64);
- write the last element of the file into a new first file F9 (again preferably of the CSV type) (step 65);
- compare each y-coordinate of each row read from the output file F8 with the y-coordinate of the point entered in the first file F9; if the difference between the two y-coordinates is less than a predefined distance (preferably 5), add the coordinates of the point read to the first file (step 66);
- identify a point with the minor x-coordinate from the output file F8 and write the coordinates of the identified point into a new second file 10 (again preferably of the CSV type) (step 67);
- compare each x-coordinate of each row in the second file F10 with the x-coordinate of the identified point; if the difference between the two x-coordinates is less than a predefined distance (preferably 5) the point is added to the second file F10 (step 68).

Next, the step 7 of extraction of the scale of values comprises at least the following steps:
- read the first and second files (step 69);
- for coordinates representing y-axis values, crop a first image I1 (preferably at the position x1=x1, y1=y1-65, x2=x2+20, y2=y2) so as to highlight the region of the graph G relating to the individual value (step 70);
- for the coordinates representing x-axis values, crop a second image I2 (preferably at the position x1=x1-20, y1=y1-65, x2=x2+20, y2=y2) so as to highlight the region of the graph G relating to the individual value (step 71).

Next, the step 7 of extraction of the scale of values comprises a step 72 of conversion of the obtained crops to grayscale.

In addition, a step 73 is carried out of applying one Otsu threshold for image binarization.

In addition, with reference to the y-axis and starting from the first cropped image I1, the step 7 of extraction of the scale of values comprises at least the following steps:
- create a horizontal kernel (step 74);
- perform a morphological operation to remove noise and isolate the horizontal lines (step 75);
- search for horizontal contours relating to the horizontal lines and extract the relevant coordinates (step 76);
- highlight the horizontal contours found on the first cropped image (step 77);
- save a file containing the extracted coordinates relating to the horizontal contours (step 78).

With reference instead to the x-axis and starting from said second cropped image I2, the step 7 of extraction of the scale of values comprises at least the following steps:
- create a vertical kernel (step 79);
- perform a morphological operation to remove noise and isolate the vertical lines (step 80);
- search for vertical contours relating to the vertical lines and extract the relevant coordinates (step 81);
- highlight the vertical contours found on the second cropped image (step 82);
- save a file F12 containing the extracted coordinates relating to the vertical contours (step 83). Next, the step 7 of extraction of the scale of values comprises at least the following steps, performed starting from files F11 and F12 containing the extracted coordinates relating to the horizontal contours and to the vertical contours:
- read all the lines in the file and write the elements into a new file until an empty line is found (step 84);
- if the line read is an empty line, then create a new file (preferably of the csv type) and repeat the previous step (step 85).

In this way, a different file is obtained for each x-axis value and for each y-axis value containing the coordinates of the recognized horizontal and vertical lines.

In addition, the step 7 of extraction of the scale of values comprises at least the following steps, with reference to the y-axis and starting from the files F13 containing the coordinates of the recognized horizontal lines:
- initialize an empty data frame to store the distances between the horizontal lines and the bounding boxes (step 86);
- calculate all the distances between the bounding boxes and the coordinates of the recognized horizontal lines contained in the files (step 87);
- select the minimum distance corresponding to the horizontal line identifying the point of a value on the y-axis (step 88);
- save the results to a file F15 (step 89);
- read the first two values of the file F15 (step 90);
- calculate the number of pixels between the two values identified by the horizontal lines recognized along the y-axis (step 91);
- calculate the value of each unit, that is, how much each pixel is worth, by making the difference between the y-axis values divided by the number of pixels between the two values (step 92);
- save the values of each unit relating to the y-axis to a file F17 (step 93).

Finally, with reference to the x-axis and starting from the files F14 containing the coordinates of the recognized vertical lines, the step 7 of extraction of the scale of values comprises at least the following steps:
- initialize an empty data frame to store the distances between the vertical lines and said bounding boxes (step 94);
- calculate all distances between the bounding boxes and the coordinates of the recognized vertical lines contained in the files (step 95);
- select the minimum distance corresponding to the vertical line identifying the point of a value on the x-axis (step 96);
- save the results to a file F16 (step 97);
- read the first two values of the file (step 98);
- calculate the number of pixels between the two values identified by the vertical lines recognized along the x-axis (step 99);
- calculate the value of each unit, that is, how much each pixel is worth, by making the difference between the x-axis values divided by the number of pixels between the two values (step 100);
- save the values of each unit relating to the x-axis to a file F18 (step 101).

It has in practice been ascertained that the described invention achieves the intended objects.

In particular, the fact is emphasized that the computer-implemented method according to the invention makes it possible to check quickly and accurately whether the energy consumption or otherwise the efficiency of one or more industrial appliances within an industrial plant is the optimal one and whether it can be improved, if necessary, by using a different appliance available on the market.

Specifically, the method according to the invention makes it possible to automatically extract the data relating to different appliances directly from the images of the graphs on the data sheets. This allows the extracted information to be used to assess the energy efficiency of the appliances on a plant, assessing and signaling the possibility of possible replacement.

## Claims

1. A computer-implemented method (1) for energy efficiency management of an industrial plant, comprising:
- calculating an energy consumption for each of a plurality of industrial appliances based on their technical characteristics obtained from data sheets;
- comparing the calculated energy consumption of each of the industrial appliances with an energy consumption of at least one industrial appliance in an existing industrial plant to identify a potential for energy reduction or efficiency improvement; and
- in response to identifying such a potential, generating a report comprising suggested changes to the industrial appliance;
**characterized in that** the technical characteristics are obtained by a process comprising:
- a step (2) of extraction of image files of graphs (G) containing curves (C) describing the technical characteristics of the industrial appliances from said data sheets;
- a step (3) of determination of characteristic equations of said curves (C), defined in the specific Cartesian space of each graph, starting from said image files of graphs (G), wherein said step (3) comprises;
- a step (4) of identification of images of the curves (C) representative of the technical characteristics of said industrial appliances starting from said image files of the graphs (G);
- a step (5) of extraction and rearrangement of the spatial coordinates of the pixels of said images of the representative curves (C) to determine the spatial coordinates of each of the curves (C);
- a step (6) of extraction of the equations relating to said curves (C) by means of interpolation of said spatial coordinates of each of the curves (C);
- a step (7) of extraction of the scale of values representing the x-axis and y-axis starting from said image files of the graphs (G); and
- a step of combining the equations extracted by interpolation with the scale of values representing the x-axis and y-axis, to obtain said characteristic equations of the curves (C) defined in the specific Cartesian space of each graph (G);
and wherein said step of calculating the energy consumption of each industrial appliance is performed by means of said determined characteristic equations.

2. Computer-implemented method (1) according to claim 1, **characterized by** the fact that said step (2) of extraction comprises at least the following steps:
- by means of a neural network, recognize within said files relating to data sheets the graphs (G) relating to the technical characteristics of the industrial appliances (step 13);
- save a plurality of image files relating to the recognized graphs (G) (step 14).

3. Computer-implemented method (1) according to one or more of the preceding claims, **characterized by** the fact that said step (4) of identification comprises at least the following steps:
- for each image relating to a graph (G), carry out a morphological transformation to increase the white regions of the image and decrease the black regions (step 28);
- for each transformed image, apply an image threshold, wherein all pixels with intensity value less than a predefined threshold value become black and all others white (step 29).
- set a predefined intensity value of the pixels (step 31);
- for each transformed image and to which the image threshold has been applied, recognize all pixels with lower intensity than said predefined intensity value (step 32);
- collect all recognized pixels into an array and create a binary mask in which the pixels with lower predefined intensity value are set to TRUE, while the remaining are set to FALSE (steps 33 and 34),
- for each transformed image and to which the image threshold has been applied, use the mask created to color the pixels set to TRUE with a predefined color (step 35).
- creation of a binary mask to isolate a specific color range (step 37);
- for each obtained image with colored pixels, apply the binary mask to make white all pixels that do not match the colored pixels (step 38);

4. Computer-implemented method (1) according to one or more of the preceding claims, **characterized by** the fact that said step (5) of extraction and rearrangement of the spatial coordinates comprises at least the following steps:
- extraction of the spatial coordinates of the colored pixels from said image with the colored pixels (step 41);
- saving the extracted spatial coordinates to a file (step 42);
- sorting the extracted coordinates with respect to the x column (step 43);
- creation of a new save file with the coordinates sorted according to the x column (step 44);
- read a coordinate from said file with the coordinates sorted according to the x column (step 45);
- if the read coordinate is a first coordinate (step 46), create a new file (preferably of the csv type) (step 47);
- if the read coordinate is not a first coordinate (step 46), calculate the Euclidean distance between the read coordinate and the last coordinate in each file (step 48);
- locate the file in which the last coordinate is the closest to the read coordinate (step 49);
- if the distance of the read coordinate is less than a predefined threshold distance (step 50), enter the read coordinate at the end of the detected file (step 51);
- if the distance of the read coordinate is greater than said predefined threshold distance (step 50), create a new file relating to a different curve and save the read coordinate (step 52);
- if each coordinate within the file has not been read (step 53), read the next coordinate and return to said step (48) of calculating the Euclidean distance between the read coordinate and the last coordinate in each file (step 54);
- if all coordinates within the file have been read (step 53), delete the files with less than a predefined number of coordinates (preferably 30) (step 55).

5. Computer-implemented method (1) according to one or more of the preceding claims, **characterized by** the fact that said step (6) of extraction of the equations comprises at least the following steps:
- for each of the files relating to each of the curves (C), apply a regression function to approximate the represented curves (C) (step 56);
- creation of a descriptive function of the trend of each curve (step 58);
- saving the descriptive functions obtained for each curve to a file (step 59).

6. Computer-implemented method (1) according to one or more of the preceding claims, **characterized by** the fact that said step (7) of extraction of the scale of values comprises at least the following steps, carried out for each image of a graph (G):
- apply an algorithm of optical character recognition (OCR) to identify the text within the image (step 61);
- create a new image comprising boxes (R) drawn around the recognized text (step 62);
- save the data to a new output file containing the recognized text and the coordinates of the corresponding bounding boxes (R) (step 63);
- read the output file starting from the last row and sort the coordinates of the boxes (R) in ascending order with respect to the x-axis (step 64);
- write the last element of the file into a new first file (step 65);
- compare each y-coordinate of each row read from the output file with the y-coordinate of the point entered in the first file; if the difference between the two y-coordinates is less than a predefined distance, add the coordinates of the point read to the first file (step 66);
- identify a point with the minor x-coordinate from the output file and write the coordinates of the identified point to a new second file (step 67);
- compare each x-coordinate of each row in the second file with the x-coordinate of the identified point; if the difference between the two x-coordinates is less than a predefined distance, the point is added to the second file (step 68).
- read said first and second files (step 69);
- for coordinates representing y-axis values, crop a first image so as to highlight the region of the graph (G) relating to the individual value (step 70);
- for coordinates representing x-axis values, crop a second image so as to highlight the region of the graph (G) relating to the individual value (step 71).

7. Computer-implemented method (1) according to one or more of the preceding claims, **characterized by** the fact that said step (7) of extraction of the scale of values comprises at least the following steps, with reference to the y-axis and starting from said first cropped image:
- create a horizontal kernel (step 74);
- perform a morphological operation to remove noise and isolate the horizontal lines (step 75);
- search for horizontal contours relating to the horizontal lines and extract their coordinates (step 76);
- highlight the horizontal contours found on the first cropped image (step 77);
- save a file containing the extracted coordinates relating to the horizontal contours (step 78).

8. Computer-implemented method (1) according to one or more of the preceding claims, **characterized by** the fact that said step (7) of extraction of the scale of values comprises at least the following steps, with reference to the x-axis and starting from said second cropped image:
- create a vertical kernel (step 79);
- perform a morphological operation to remove noise and isolate the vertical lines (step 80);
- search for vertical contours relating to the vertical lines and extract their coordinates (step 81);
- highlight the vertical contours found on the second cropped image (step 82);
- save a file containing the extracted coordinates relating to the vertical contours (step 83).

9. Computer-implemented method (1) according to one or more of the preceding claims, **characterized by** the fact that said step (7) of extraction of the scale of values comprises at least the following steps, with reference to the y-axis and starting from the files containing the coordinates of the recognized horizontal lines:
- initialize an empty dataframe to store the distances between the horizontal lines and said bounding boxes (R) (step 86);
- calculate all the distances between the bounding boxes (R) and the coordinates of the recognized horizontal lines contained in the files (step 87);
- select the minimum distance corresponding to the horizontal line identifying the point of a value on the y-axis (step 88);
- save the results to a file (step 89);
- read the first two values in the file (step 90);
- calculate the number of pixels between the two values identified by the horizontal lines recognized along the y-axis (step 91);
- calculate the value of each unit, that is, how much each pixel is worth, by making the difference between the y-axis values divided by the number of pixels between the two values (step 92);
- save the values of each unit relating to the y-axis (step 93).

10. Computer-implemented method (1) according to one or more of the preceding claims, **characterized by** the fact that said step (7) of extraction of the scale of values comprises at least the following steps, with reference to the x-axis and from the files containing the coordinates of the recognized vertical lines:
- initialize an empty dataframe to store the distances between vertical lines and said bounding boxes (R) (step 94);
- calculate all distances between the bounding boxes (R) and the coordinates of the recognized vertical lines contained in the files (step 95);
- select the minimum distance corresponding to the vertical line identifying the point of a value on the x-axis (step 96);
- save the results to a file (step 97);
- read the first two values in the file (step 98);
- calculate the number of pixels between the two values identified by the vertical lines recognized along the x-axis (step 99);
- calculate the value of each unit, that is, how much each pixel is worth, by making the difference between the x-axis values divided by the number of pixels between the two values (step 100);
- save the values of each unit relating to the x-axis (step 101).

## Patentansprüche

1. Computerimplementiertes Verfahren (1) für das Management der Energieeffizienz einer Industrieanlage, umfassend:
- Berechnen eines Energieverbrauchs für jedes einer Mehrzahl von Industriegeräten auf Grundlage ihrer technischen Eigenschaften, die aus Datenblättern erhalten werden;
- Vergleichen des berechneten Energieverbrauchs jedes der Industriegeräte mit einem Energieverbrauch wenigstens eines Industriegeräts in einer bestehenden Industrieanlage, um ein Potenzial für eine Energiereduzierung oder Effizienzverbesserung zu identifizieren; und
- als Reaktion auf die Identifizierung eines solchen Potenzials Erzeugen eines Berichts, umfassend vorgeschlagene Änderungen an dem Industriegerät;
**dadurch gekennzeichnet, dass** die technischen Eigenschaften durch einen Prozess erhalten werden, der umfasst:
- einen Schritt (2) der Extraktion von Bilddateien von Diagrammen (G), die Kurven (C) enthalten, welche die technischen Eigenschaften der Industriegeräte beschreiben, aus den Datenblättern;
- einen Schritt (3) der Ermittlung charakteristischer Gleichungen der Kurven (C), die in dem spezifischen kartesischen Raum jedes Diagramms definiert sind; ausgehend von den Bilddateien von Diagrammen (G), wobei der Schritt (3) umfasst;
- einen Schritt (4) der Identifizierung von Bildern der Kurven (C), die für die technischen Eigenschaften der Industriegeräte repräsentativ sind, ausgehend von den Bilddateien der Diagramme (G);
- einen Schritt (5) der Extraktion und Neuordnung der räumlichen Koordinaten der Pixel der Bilder der repräsentativen Kurven (C), um die räumlichen Koordinaten jeder der Kurven (C) zu bestimmen;
- einen Schritt (6) der Extraktion der sich auf die Kurven (C) beziehenden Gleichungen mittels Interpolation der räumlichen Koordinaten jeder der Kurven (C);
- einen Schritt (7) der Extraktion der Skala von Werten, welche die x-Achse und y-Achse darstellen, ausgehend von den Bilddateien der Diagramme (G); und
- einen Schritt des Kombinierens der durch Interpolation extrahierten Gleichungen mit der Skala von Werten, welche die x-Achse und y-Achse darstellen; um die charakteristischen Gleichungen der Kurven (C) zu erhalten, die in dem spezifischen kartesischen Raum jedes Diagramms (G) definiert sind;
und wobei der Schritt des Berechnens des Energieverbrauchs jedes Industriegeräts mittels der ermittelten charakteristischen Gleichungen durchgeführt wird.

2. Computerimplementiertes Verfahren (1) nach Anspruch 1; **dadurch gekennzeichnet, dass** der Schritt (2) der Extraktion wenigstens die folgenden Schritte umfasst:
- mittels eines neuronalen Netzes innerhalb der Dateien, die sich auf Datenblätter beziehen, die Diagramme (G) erkennen, die sich auf die technischen Eigenschaften der Industriegeräte beziehen (Schritt 13);
- eine Mehrzahl von Bilddateien speichern, die sich auf die erkannten Diagramme (G) beziehen (Schritt 14).

3. Computerimplementiertes Verfahren (1) nach einem oder mehreren der vorhergehenden Ansprüche, **dadurch gekennzeichnet, dass** der Schritt (4) der Identifizierung wenigstens die folgenden Schritte umfasst:
- für jedes Bild, das sich auf ein Diagramm (G) bezieht, eine morphologische Transformation durchführen, um die weißen Bereiche des Bildes zu vergrößern und die schwarzen Bereiche zu verkleinern (Schritt 28);
- für jedes transformierte Bild einen Bildschwellenwert anwenden, wobei alle Pixel mit einem Intensitätswert kleiner als ein vordefinierter Schwellenwert schwarz werden und alle anderen weiß (Schritt 29);
- einen vordefinierten Intensitätswert der Pixel festlegen (Schritt 31);
- für jedes transformierte Bild und auf welches der Bildschwellenwert angewendet wurde, alle Pixel mit einer geringeren Intensität als der vordefinierte Intensitätswert erkennen (Schritt 32);
- alle erkannten Pixel in einem Array sammeln und eine binäre Maske erzeugen, in welcher die Pixel mit niedrigerem vordefiniertem Intensitätswert auf TRUE gesetzt werden, während die verbleibenden auf FALSE gesetzt werden (Schritte 33 und 34),
- für jedes transformierte Bild und auf welches der Bildschwellenwert angewendet wurde, die erzeugte Maske verwenden, um die auf TRUE gesetzten Pixel mit einer vordefinierten Farbe zu färben (Schritt 35),
- Erzeugen einer binären Maske zum Isolieren eines spezifischen Farbbereichs (Schritt 37);
- für jedes erhaltene Bild mit gefärbten Pixeln die binäre Maske anwenden, um alle Pixel weiß zu machen, die nicht mit den gefärbten Pixeln übereinstimmen (Schritt 38);

4. Computerimplementiertes Verfahren (1) nach einem oder mehreren der vorhergehenden Ansprüche, **dadurch gekennzeichnet, dass** der Schritt (5) der Extraktion und Neuordnung der räumlichen Koordinaten wenigstens die folgenden Schritte umfasst:
- Extraktion der räumlichen Koordinaten der gefärbten Pixel aus dem Bild mit den gefärbten Pixeln (Schritt 41);
- Speichern der extrahierten räumlichen Koordinaten in einer Datei (Schritt 42);
- Sortieren der extrahierten Koordinaten bezüglich der x-Spalte (Schritt 43);
- Erzeugen einer neuen Speicherdatei mit den gemäß der x-Spalte sortierten Koordinaten (Schritt 44);
- eine Koordinate aus der Datei mit den gemäß der x-Spalte sortierten Koordinaten lesen (Schritt 45);
- wenn die gelesene Koordinate eine erste Koordinate ist (Schritt 46), eine neue Datei (vorzugsweise vom csv-Typ) erzeugen (Schritt 47);
- wenn die gelesene Koordinate keine erste Koordinate ist (Schritt 46), den euklidischen Abstand zwischen der gelesenen Koordinate und der letzten Koordinate in jeder Datei berechnen (Schritt 48);
- die Datei lokalisieren, in welcher die letzte Koordinate der gelesenen Koordinate am nächsten ist (Schritt 49);
- wenn der Abstand der gelesenen Koordinate kleiner als ein vordefinierter Schwellenabstand ist (Schritt 50), die gelesene Koordinate am Ende der detektierten Datei eingeben (Schritt 51);
- wenn der Abstand der gelesenen Koordinate größer als der vordefinierte Schwellenabstand ist (Schritt 50), eine neue Datei erzeugen, die sich auf eine andere Kurve bezieht, und die gelesene Koordinate speichern (Schritt 52);
- wenn jede Koordinate innerhalb der Datei nicht gelesen worden ist (Schritt 53), die nächste Koordinate lesen und zu dem Schritt (48) des Berechnens des euklidischen Abstands zwischen der gelesenen Koordinate und der letzten Koordinate in jeder Datei zurückkehren (Schritt 54);
- wenn alle Koordinaten innerhalb der Datei gelesen worden sind (Schritt 53), die Dateien mit weniger als einer vordefinierten Anzahl von Koordinaten (vorzugsweise 30) löschen (Schritt 55).

5. Computerimplementiertes Verfahren (1) nach einem oder mehreren der vorhergehenden Ansprüche, **dadurch gekennzeichnet, dass** der Schritt (6) der Extraktion der Gleichungen wenigstens die folgenden Schritte umfasst:
- für jede der Dateien, die sich auf jede der Kurven (C) beziehen, eine Regressionsfunktion anwenden, um die dargestellten Kurven (C) anzunähern (Schritt 56);
- Erzeugen einer den Verlauf jeder Kurve beschreibenden Funktion (Schritt 58);
- Speichern der für jede Kurve erhaltenen beschreibenden Funktionen in einer Datei (Schritt 59).

6. Computerimplementiertes Verfahren (1) nach einem oder mehreren der vorhergehenden Ansprüche, **dadurch gekennzeichnet, dass** der Schritt (7) der Extraktion der Skala von Werten wenigstens die folgenden Schritte umfasst, die für jedes Bild eines Diagramms (G) durchgeführt werden:
- einen Algorithmus der optischen Zeichenerkennung (OCR) anwenden, um den Text innerhalb des Bildes zu identifizieren (Schritt 61);
- ein neues Bild erzeugen, umfassend Kästen (R), die um den erkannten Text gezeichnet sind (Schritt 62);
- die Daten in einer neuen Ausgabedatei speichern, welche den erkannten Text und die Koordinaten der entsprechenden begrenzenden Kästen (R) enthält (Schritt 63);
- die Ausgabedatei ausgehend von der letzten Zeile lesen und die Koordinaten der Kästen (R) bezüglich der x-Achse in aufsteigender Reihenfolge sortieren (Schritt 64);
- das letzte Element der Datei in eine neue erste Datei schreiben (Schritt 65);
- jede y-Koordinate jeder aus der Ausgabedatei gelesenen Zeile mit der y-Koordinate des in die erste Datei eingegebenen Punkts vergleichen; wenn die Differenz zwischen den beiden y-Koordinaten kleiner als ein vordefinierter Abstand ist, die Koordinaten des gelesenen Punkts der ersten Datei hinzufügen (Schritt 66);
- einen Punkt mit der geringeren x-Koordinate aus der Ausgabedatei identifizieren und die Koordinaten des identifizierten Punkts in eine neue zweite Datei schreiben (Schritt 67);
- jede x-Koordinate jeder Zeile in der zweiten Datei mit der x-Koordinate des identifizierten Punkts vergleichen; wenn die Differenz zwischen den beiden x-Koordinaten kleiner als ein vordefinierter Abstand ist, wird der Punkt der zweiten Datei hinzugefügt (Schritt 68),
- die erste und zweite Datei lesen (Schritt 69);
- für Koordinaten, die y-Achsenwerte darstellen, ein erstes Bild so zuschneiden, dass der Bereich des Diagramms (G), der sich auf den einzelnen Wert bezieht, hervorgehoben wird (Schritt 70);
- für Koordinaten, die x-Achsenwerte darstellen, ein zweites Bild so zuschneiden, dass der Bereich des Diagramms (G), der sich auf den einzelnen Wert bezieht, hervorgehoben wird (Schritt 71).

7. Computerimplementiertes Verfahren (1) nach einem oder mehreren der vorhergehenden Ansprüche, **dadurch gekennzeichnet, dass** der Schritt (7) der Extraktion der Skala von Werten wenigstens die folgenden Schritte umfasst, mit Bezug auf die y-Achse und ausgehend von dem ersten zugeschnittenen Bild:
- einen horizontalen Kernel erzeugen (Schritt 74);
- eine morphologische Operation durchführen, um Rauschen zu entfernen und die horizontalen Linien zu isolieren (Schritt 75);
- nach horizontalen Konturen suchen, die sich auf die horizontalen Linien beziehen, und deren Koordinaten extrahieren (Schritt 76);
- die gefundenen horizontalen Konturen auf dem ersten zugeschnittenen Bild hervorheben (Schritt 77);
- eine Datei speichern, welche die extrahierten Koordinaten enthält, die sich auf die horizontalen Konturen beziehen (Schritt 78).

8. Computerimplementiertes Verfahren (1) nach einem oder mehreren der vorhergehenden Ansprüche, **dadurch gekennzeichnet, dass** der Schritt (7) der Extraktion der Skala von Werten wenigstens die folgenden Schritte umfasst, mit Bezug auf die x-Achse und ausgehend von dem zweiten zugeschnittenen Bild:
- einen vertikalen Kernel erzeugen (Schritt 79);
- eine morphologische Operation durchführen, um Rauschen zu entfernen und die vertikalen Linien zu isolieren (Schritt 80);
- nach vertikalen Konturen suchen, die sich auf die vertikalen Linien beziehen, und deren Koordinaten extrahieren (Schritt 81);
- die gefundenen vertikalen Konturen auf dem zweiten zugeschnittenen Bild hervorheben (Schritt 82);
- eine Datei speichern, welche die extrahierten Koordinaten enthält, die sich auf die vertikalen Konturen beziehen (Schritt 83).

9. Computerimplementiertes Verfahren (1) nach einem oder mehreren der vorhergehenden Ansprüche, **dadurch gekennzeichnet, dass** der Schritt (7) der Extraktion der Skala von Werten wenigstens die folgenden Schritte umfasst, mit Bezug auf die y-Achse und ausgehend von den Dateien, welche die Koordinaten der erkannten horizontalen Linien enthalten:
- einen leeren Dataframe initialisieren, um die Abstände zwischen den horizontalen Linien und den begrenzenden Kästen (R) zu speichern (Schritt 86);
- alle Abstände zwischen den begrenzenden Kästen (R) und den in den Dateien enthaltenen Koordinaten der erkannten horizontalen Linien berechnen (Schritt 87);
- den minimalen Abstand auswählen, der der horizontalen Linie entspricht, welche den Punkt eines Werts auf der y-Achse identifiziert (Schritt 88);
- die Ergebnisse in einer Datei speichern (Schritt 89);
- die ersten beiden Werte in der Datei lesen (Schritt 90);
- die Anzahl der Pixel zwischen den beiden Werten berechnen, die durch die entlang der y-Achse erkannten horizontalen Linien identifiziert werden (Schritt 91);
- den Wert jeder Einheit, das heißt, wie viel jedes Pixel wert ist, durch Bilden der Differenz zwischen den y-Achsenwerten geteilt durch die Anzahl der Pixel zwischen den beiden Werten berechnen (Schritt 92);
- die Werte jeder Einheit, die sich auf die y-Achse beziehen, speichern (Schritt 93).

10. Computerimplementiertes Verfahren (1) nach einem oder mehreren der vorhergehenden Ansprüche, **dadurch gekennzeichnet, dass** der Schritt (7) der Extraktion der Skala von Werten wenigstens die folgenden Schritte umfasst, mit Bezug auf die x-Achse und aus den Dateien, welche die Koordinaten der erkannten vertikalen Linien enthalten:
- einen leeren Dataframe initialisieren, um die Abstände zwischen vertikalen Linien und den begrenzenden Kästen (R) zu speichern (Schritt 94);
- alle Abstände zwischen den begrenzenden Kästen (R) und den in den Dateien enthaltenen Koordinaten der erkannten vertikalen Linien berechnen (Schritt 95);
- den minimalen Abstand auswählen, der der vertikalen Linie entspricht, welche den Punkt eines Werts auf der x-Achse identifiziert (Schritt 96);
- die Ergebnisse in einer Datei speichern (Schritt 97);
- die ersten beiden Werte in der Datei lesen (Schritt 98);
- die Anzahl der Pixel zwischen den beiden Werten berechnen, die durch die entlang der x-Achse erkannten vertikalen Linien identifiziert werden (Schritt 99);
- den Wert jeder Einheit, das heißt, wie viel jedes Pixel wert ist, durch Bilden der Differenz zwischen den x-Achsenwerten geteilt durch die Anzahl der Pixel zwischen den beiden Werten berechnen (Schritt 100);
- die Werte jeder Einheit, die sich auf die x-Achse beziehen, speichern (Schritt 101).

## Revendications

1. - Procédé mis en œuvre par ordinateur (1) pour la gestion de l'efficacité énergétique d'une installation industrielle, comprenant :
- calculer une consommation d'énergie pour chacun d'une pluralité d'appareils industriels sur la base de leurs caractéristiques techniques obtenues à partir de fiches techniques ;
- comparer la consommation d'énergie calculée de chacun des appareils industriels à une consommation d'énergie d'au moins un appareil industriel dans une installation industrielle existante afin d'identifier un potentiel pour une réduction d'énergie ou une amélioration d'efficacité ; et
- en réponse à l'identification d'un tel potentiel, générer un rapport comprenant des modifications suggérées à l'appareil industriel ;
**caractérisé par le fait que** les caractéristiques techniques sont obtenues par un processus comprenant :
- une étape (2) d'extraction, à partir desdites fiches techniques, de fichiers images de graphiques (G) contenant des courbes (C) décrivant les caractéristiques techniques des appareils industriels ;
- une étape (3) de détermination d'équations caractéristiques desdites courbes (C), définies dans l'espace cartésien spécifique de chaque graphique, à partir desdits fichiers images des graphiques (G), ladite étape (3) comprenant :
- une étape (4) d'identification d'images des courbes (C) représentatives des caractéristiques techniques desdits appareils industriels à partir desdits fichiers images des graphiques (G) ;
- une étape (5) d'extraction et de réorganisation des coordonnées spatiales des pixels desdites images des courbes représentatives (C) afin de déterminer les coordonnées spatiales de chacune des courbes (C) ;
- une étape (6) d'extraction des équations relatives auxdites courbes (C) au moyen d'une interpolation desdites coordonnées spatiales de chacune des courbes (C) ;
- une étape (7) d'extraction de l'échelle de valeurs représentant l'axe x et l'axe y à partir desdits fichiers images des graphiques (G) ; et
- une étape de combinaison des équations extraites par interpolation avec l'échelle de valeurs représentant l'axe x et l'axe y, afin d'obtenir lesdites équations caractéristiques des courbes (C) définies dans l'espace cartésien spécifique de chaque graphique (G) ;
et dans lequel ladite étape de calcul de la consommation d'énergie de chaque appareil industriel est réalisée au moyen desdites équations caractéristiques déterminées.

2. - Procédé mis en œuvre par ordinateur (1) selon la revendication 1, **caractérisé par le fait que** ladite étape (2) d'extraction comprend au moins les étapes suivantes :
- à l'aide d'un réseau neuronal, reconnaître, au sein desdits fichiers relatifs aux fiches techniques, les graphiques (G) relatifs aux caractéristiques techniques des appareils industriels (étape 13) ;
- sauvegarder une pluralité de fichiers images relatifs aux graphiques (G) reconnus (étape 14).

3. - Procédé mis en œuvre par ordinateur (1) selon une ou plusieurs des revendications précédentes, **caractérisé par le fait que** ladite étape (4) d'identification comprend au moins les étapes suivantes :
- pour chaque image relative à un graphique (G), effectuer une transformation morphologique afin d'augmenter les zones blanches de l'image et de réduire les zones noires (étape 28) ;
- pour chaque image transformée, appliquer un seuil d'image, où tous les pixels dont la valeur d'intensité est inférieure à une valeur de seuil prédéfinie deviennent noirs et tous les autres blancs (étape 29) ;
- définir une valeur d'intensité prédéfinie des pixels (étape 31) ;
- pour chaque image transformée et à laquelle le seuil d'image a été appliqué, reconnaître tous les pixels dont l'intensité est inférieure à ladite valeur d'intensité prédéfinie (étape 32) ;
- collecter tous les pixels reconnus dans un tableau et créer un masque binaire dans lequel les pixels avec la valeur d'intensité prédéfinie inférieure sont définis sur VRAI, tandis que les autres sont définis sur FAUX (étapes 33 et 34) ;
- pour chaque image transformée et à laquelle le seuil d'image a été appliqué, utiliser le masque créé pour colorer les pixels définis sur VRAI avec une couleur prédéfinie (étape 35) ;
- créer un masque binaire pour isoler une gamme de couleurs spécifique (étape 37) ;
- pour chaque image obtenue avec des pixels colorés, appliquer le masque binaire afin de rendre blancs tous les pixels qui ne correspondent pas aux pixels colorés (étape 38).

4. - Procédé mis en œuvre par ordinateur (1) selon une ou plusieurs des revendications précédentes, **caractérisé par le fait que** ladite étape (5) d'extraction et de réorganisation des coordonnées spatiales comprend au moins les étapes suivantes :
- extraire les coordonnées spatiales des pixels colorés à partir de ladite image avec les pixels colorés (étape 41) ;
- sauvegarder les coordonnées spatiales extraites dans un fichier (étape 42) ;
- trier les coordonnées extraites par rapport à la colonne x (étape 43) ;
- créer un nouveau fichier de sauvegarde avec les coordonnées triées selon la colonne x (étape 44) ;
- lire une coordonnée à partir dudit fichier avec les coordonnées triées selon la colonne x (étape 45) ;
- si la coordonnée lue est une première coordonnée (étape 46), créer un nouveau fichier (de préférence du type csv) (étape 47) ;
- si la coordonnée lue n'est pas une première coordonnée (étape 46), calculer la distance euclidienne entre la coordonnée lue et la dernière coordonnée dans chaque fichier (étape 48) ;
- localiser le fichier dans lequel la dernière coordonnée est la plus proche de la coordonnée lue (étape 49) ;
- si la distance de la coordonnée lue est inférieure à une distance de seuil prédéfinie (étape 50), entrer la coordonnée lue à la fin du fichier détecté (étape 51) ;
- si la distance de la coordonnée lue est supérieure à ladite distance de seuil prédéfinie (étape 50), créer un nouveau fichier relatif à une courbe différente et sauvegarder la coordonnée lue (étape 52) ;
- si chaque coordonnée dans le fichier n'a pas été lue (étape 53), lire la coordonnée suivante et revenir à ladite étape (48) de calcul de la distance euclidienne entre la coordonnée lue et la dernière coordonnée dans chaque fichier (étape 54) ;
- si toutes les coordonnées dans le fichier ont été lues (étape 53), supprimer les fichiers comportant moins d'un nombre prédéfini de coordonnées (de préférence 30) (étape 55).

5. - Procédé mis en œuvre par ordinateur (1) selon une ou plusieurs des revendications précédentes, **caractérisé par le fait que** ladite étape (6) d'extraction des équations comprend au moins les étapes suivantes :
- pour chacun des fichiers relatifs à chacune des courbes (C), appliquer une fonction de régression pour réaliser une approximation des courbes représentées (C) (étape 56) ;
- créer une fonction descriptive de la tendance de chaque courbe (étape 58) ;
- sauvegarder les fonctions descriptives obtenues pour chaque courbe dans un fichier (étape 59).

6. - Procédé mis en œuvre par ordinateur (1) selon une ou plusieurs des revendications précédentes, **caractérisé par le fait que** ladite étape (7) d'extraction de l'échelle de valeurs comprend au moins les étapes suivantes, effectuées pour chaque image d'un graphique (G) :
- appliquer un algorithme de reconnaissance optique de caractères (OCR) pour identifier le texte contenu dans l'image (étape 61) ;
- créer une nouvelle image comprenant des boîtes (R) tracées autour du texte reconnu (étape 62) ;
- sauvegarder les données dans un nouveau fichier de sortie contenant le texte reconnu et les coordonnées des boîtes de délimitation (R) correspondantes (étape 63) ;
- lire le fichier de sortie en commençant par la dernière rangée et trier les coordonnées des boîtes (R) par ordre croissant par rapport à l'axe x (étape 64) ;
- écrire le dernier élément du fichier dans un nouveau premier fichier (étape 65) ;
- comparer chaque coordonnée y de chaque rangée lue à partir du fichier de sortie à la coordonnée y du point entré dans le premier fichier ; si la différence entre les deux coordonnées y est inférieure à une distance prédéfinie, ajouter les coordonnées du point lu au premier fichier (étape 66) ;
- identifier un point ayant la plus petite coordonnée x à partir du fichier de sortie et écrire les coordonnées du point identifié dans un nouveau second fichier (étape 67) ;
- comparer chaque coordonnée x de chaque rangée dans le second fichier à la coordonnée x du point identifié ; si la différence entre les deux coordonnées x est inférieure à une distance prédéfinie, le point est ajouté au second fichier (étape 68) ;
- lire lesdits premier et second fichiers (étape 69) ;
- pour des coordonnées représentant des valeurs d'axe y, recadrer une première image de manière à mettre en évidence la région du graphique (G) relative à la valeur individuelle (étape 70) ;
- pour des coordonnées représentant des valeurs d'axe x, recadrer une seconde image de manière à mettre en évidence la région du graphique (G) relative à la valeur individuelle (étape 71).

7. - Procédé mis en œuvre par ordinateur (1) selon une ou plusieurs des revendications précédentes, **caractérisé par le fait que** ladite étape (7) d'extraction de l'échelle de valeurs comprend au moins les étapes suivantes, en référence à l'axe y et à partir de ladite première image recadrée :
- créer un noyau horizontal (étape 74) ;
- effectuer une opération morphologique pour éliminer le bruit et isoler les lignes horizontales (étape 75) ;
- rechercher des contours horizontaux relatifs aux lignes horizontales et extraire leurs coordonnées (étape 76) ;
- mettre en évidence les contours horizontaux trouvés sur la première image recadrée (étape 77) ;
- sauvegarder un fichier contenant les coordonnées extraites relatives aux contours horizontaux (étape 78).

8. - Procédé mis en œuvre par ordinateur (1) selon une ou plusieurs des revendications précédentes, **caractérisé par le fait que** ladite étape (7) d'extraction de l'échelle de valeurs comprend au moins les étapes suivantes, en référence à l'axe x et à partir de ladite seconde image recadrée :
- créer un noyau vertical (étape 79) ;
- effectuer une opération morphologique pour supprimer le bruit et isoler les lignes verticales (étape 80) ;
- rechercher des contours verticaux relatifs aux lignes verticales et extraire leurs coordonnées (étape 81) ;
- mettre en évidence les contours verticaux trouvés sur la seconde image recadrée (étape 82) ;
- sauvegarder un fichier contenant les coordonnées extraites relatives aux contours verticaux (étape 83).

9. - Procédé mis en œuvre par ordinateur (1) selon une ou plusieurs des revendications précédentes, **caractérisé par le fait que** ladite étape (7) d'extraction de l'échelle de valeurs comprend au moins les étapes suivantes, en référence à l'axe y et à partir des fichiers contenant les coordonnées des lignes horizontales reconnues :
- initialiser une trame de données vide pour stocker les distances entre les lignes horizontales et lesdites boîtes de délimitation (R) (étape 86) ;
- calculer toutes les distances entre les boîtes de délimitation (R) et les coordonnées des lignes horizontales reconnues contenues dans les fichiers (étape 87) ;
- sélectionner la distance minimale correspondant à la ligne horizontale identifiant le point d'une valeur sur l'axe y (étape 88) ;
- sauvegarder les résultats dans un fichier (étape 89) ;
- lire les deux premières valeurs dans le fichier (étape 90) ;
- calculer le nombre de pixels entre les deux valeurs identifiées par les lignes horizontales reconnues le long de l'axe y (étape 91) ;
- calculer la valeur de chaque unité, c'est-à-dire la valeur attribuée à chaque pixel, en divisant la différence entre les valeurs d'axe y par le nombre de pixels entre les deux valeurs (étape 92) ;
- sauvegarder les valeurs de chaque unité relative à l'axe y (étape 93).

10. - Procédé mis en œuvre par ordinateur (1) selon une ou plusieurs des revendications précédentes, **caractérisé par le fait que** ladite étape (7) d'extraction de l'échelle de valeurs comprend au moins les étapes suivantes, en référence à l'axe x et à partir des fichiers contenant les coordonnées des lignes verticales reconnues :
- initialiser une trame de données vide pour stocker les distances entre les lignes verticales et lesdites boîtes de délimitation (R) (étape 94) ;
- calculer toutes les distances entre les boîtes de délimitation (R) et les coordonnées des lignes verticales reconnues contenues dans les fichiers (étape 95) ;
- sélectionner la distance minimale correspondant à la ligne verticale identifiant le point d'une valeur sur l'axe x (étape 96) ;
- sauvegarder les résultats dans un fichier (étape 97) ;
- lire les deux premières valeurs dans le fichier (étape 98) ;
- calculer le nombre de pixels entre les deux valeurs identifiées par les lignes verticales reconnues le long de l'axe x (étape 99) ;
- calculer la valeur de chaque unité, c'est-à-dire la valeur attribuée à chaque pixel, en divisant la différence entre les valeurs d'axe x par le nombre de pixels entre les deux valeurs (étape 100) ;
- sauvegarder les valeurs de chaque unité relative à l'axe x (étape 101).
